# EUROPEAN PATENT APPLICATION

(11) **EP 4 794 242 A1**
(43) Date of publication of application: **19.08.2026**
(21) Application number: 26154177.5
(22) Date of filing: 26.01.2026
(51) Int. Cl.: H04L 5/00, H04W 16/14, H04W 28/16, H04W 72/12, H04W 88/10

(54) **AUTOMATED NON-WIFI CHANNEL ASSIGNMENT**

(30) Priority: 14.02.2025 US 202563758677 P; 22.01.2026 US 202619456834
(71) Applicant: Juniper Networks, Inc., Sunnyvale, CA 94089-1206 (US)
(72) Inventor: LIN, May Zar, Sunnyvale, 94089 (US); WANG, Wenfeng, Sunnyvale, 94089 (US); AZEEZ, Anilash Abdul, Sunnyvale, 94089 (US)
(74) Representative: Marks & Clerk LLP

(57) **Abstract**

Techniques are disclosed for a network management system (NMS) that determines a non-WIFI channel assignment for an access point (AP). In an example, the NMS is configured to determine neighbor APs at a site based on scan radio data for a frequency band at the site. The NMS determines a non-WIFI channel to assign to a non-WIFI transceiver of the AP that does not interfere with operating channels for non-WIFI transceivers of one or more APs of the neighbor APs and that does not interfere with operating channels for WIFI radios of the AP and the neighbor APs that operate on the same frequency band as the non-WIFI transceiver of the AP. The NMS is further configured to send a message to the AP to cause the AP to operate the non-WIFI transceiver on the assigned non-WIFI channel.

## Description

This application claims the benefit of US Patent Application No. 19/456,834, filed 22 January 2026, which claims the benefit of US Provisional Patent Application No. 63/758,677, filed 14 February 2025, the entire content of each application is incorporated herein by reference.

### TECHNICAL FIELD

The disclosure relates generally to computer networks and, more specifically, to radio resource management in a wireless network.

### BACKGROUND

Commercial premises or sites, such as offices, hospitals, airports, stadiums, or retail outlets, often install complex wireless network systems, including a network of wireless access points (APs), throughout the premises to provide wireless network services to one or more wireless client devices (or simply, "clients"). APs are physical, electronic devices that enable other devices to wirelessly connect to a wired network using various wireless networking protocols and technologies, such as wireless local area networking protocols conforming to one or more of the IEEE 802.11 standards (i.e., "WIFI"), BLUETOOTH / BLUETOOTH Low Energy (BLE), mesh networking protocols such as ZigBee, or other wireless networking technologies.

To provide wireless networks, APs are configured for wireless communication in one or more wireless frequency bands, e.g., a 2.4 GHz frequency band, a 5 GHz frequency band, and/or a 6 GHz frequency band. Each frequency band is comprised of a plurality of channels. At any given time, an AP may be assigned to operate (e.g., transmit and receive wireless signals) on a specific one of the plurality of channels within each of the one or more wireless frequency bands.

### SUMMARY

Particular aspects are set out in the appended independent claims. Various optional embodiments are set out in the dependent claims.

In general, this disclosure describes techniques for a network management system (NMS) of a wireless network to automatically assign a non-WIFI channel to a non-WIFI transceiver of an access point (AP) to avoid overlap or interference with WIFI operating channels and non-WIFI operating channels of the AP and neighboring APs. Traditional WIFI channel assignment techniques may not recognize or consider non-WIFI transceivers of APs and their operating channels. Instead, an administrator may manually set channel assignments for non-WIFI transceivers. However, a non-WIFI operating channel may overlap with a portion of frequencies within a WIFI operating channel on the same frequency band, resulting in the degraded performance of both the non-WIFI and WIFI operating channels. In this scenario, an administrator may need to manually reconfigure the non-WIFI channel assignments to avoid the WIFI operating channels within the same frequency band. Manually reconfiguring non-WIFI channels for APs may be impossible when an organization includes hundreds of sites and thousands of APs. Furthermore, an administrator may find it challenging to determine when a non-WIFI channel assignment for an AP results in interference with operating channels of other non-WIFI transceivers and with WIFI operating channels, as some non-WIFI devices may only transmit on a periodic basis.

Instead of requiring manual reassignment, the disclosed techniques enable the NMS to determine WIFI and non-WIFI channel assignment to avoid interference between the WIFI and non-WIFI channels on the same frequency band. The NMS determines neighboring APs of an AP at site using scan radio data of the frequency band. The NMS determines a channel on the frequency band to assign to a non-WIFI transceiver that does not interfere with WIFI operating channels and non-WIFI operating channels of the AP and the neighboring APs, and assigns the channel to the non-WIFI transceiver.

The techniques of this disclosure may provide one or more technical improvements that provide practical advantages. For example, the techniques may enable an NMS to optimize channel assignment of both WIFI channels and non-WIFI channels and avoid assigning WIFI and non-WIFI channels that overlap in frequency to the same AP and/or a cluster of neighboring APs. Rather than requiring an administrator to manually assign and reassign channels to avoid overlap, the NMS provides automated channel assignment to preemptively avoid overlapping channel assignments between WIFI and non-WIFI channels to optimize wireless performance.

The details of one or more examples of the techniques of this disclosure are set forth in the accompanying drawings and the description below. Other features, objects, and advantages of the techniques will be apparent from the description and drawings, and from the claims.

### BRIEF DESCRIPTION OF DRAWINGS

FIG. 1A is a diagram of an example network system including a network management system configured to automatically assign WIFI and non-WIFI channels to access points, in accordance with one or more techniques of the disclosure.
FIG. 1B is a block diagram illustrating further example details of the network system of FIG. 1A.
FIG. 2 is a block diagram of an example access point device in accordance with one or more techniques of the disclosure.
FIG. 3 is a block diagram of an example network management system in accordance with one or more techniques of the disclosure.
FIG. 4 is a block diagram of an example user equipment device in accordance with one or more techniques of the disclosure.
FIG. 5 is a block diagram of an example network node, such as a router or switch, in accordance with one or more techniques of the disclosure.
FIG. 6 is a graph of example wireless channels of a frequency band, in accordance with one or more techniques of this disclosure.
FIGS. 7A-7B are conceptual diagrams illustrating example network topologies, in accordance with one or more techniques of this disclosure.
FIG. 8 is a flowchart of an example operation of determining non-WIFI channel assignments, in accordance with one or more techniques of the disclosure.

### DETAILED DESCRIPTION

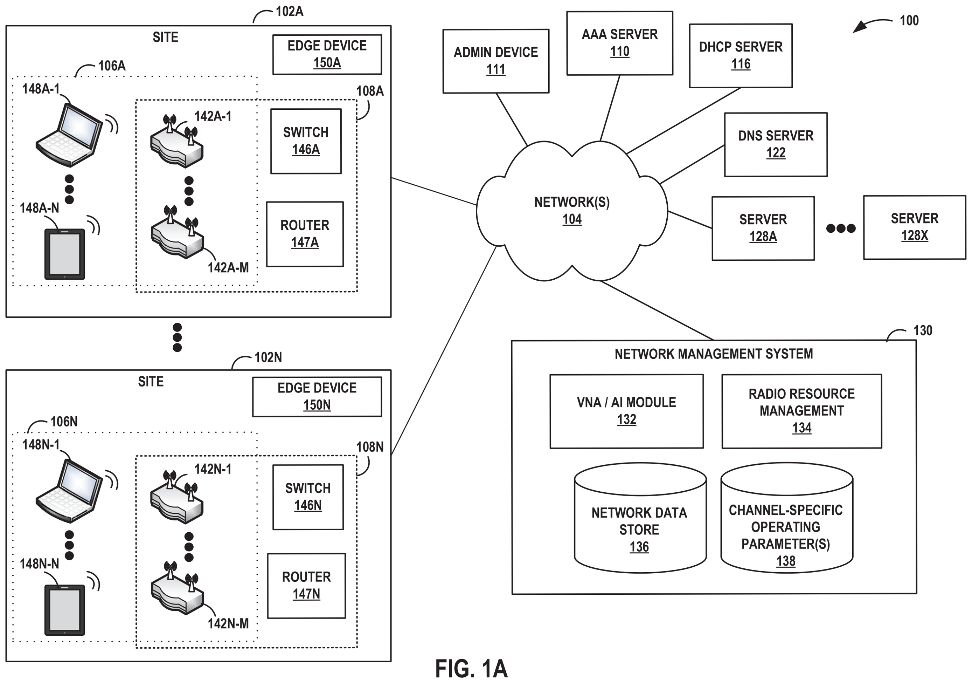

FIG. 1A is a diagram of an example network system 100 including a network management system (NMS) 130 configured to automatically assign WIFI and non-WIFI channels to access points (APs), in accordance with one or more techniques of the disclosure. Example network system 100 includes a plurality sites 102A-102N at which a network service provider manages one or more wireless networks 106A-106N, respectively. Although in FIG. 1A each site 102A-102N is shown as including a single wireless network 106A-106N, respectively, in some examples, each site 102A-102N may include multiple wireless networks, and the disclosure is not limited in this respect.

Each site 102A-102N includes a plurality of network access server (NAS) devices 108A-108N, such as access points (APs) 142, switches 146, or routers 147. NAS devices 108 may include any network infrastructure devices capable of authenticating and authorizing client devices to access an enterprise network. For example, site 102A includes a plurality of APs 142A-1 through 142A-M. Similarly, site 102N includes a plurality of APs 142N-1 through 142N-M. Each AP 142 may be any type of wireless access point, including, but not limited to, a commercial or enterprise AP, a router, or any other device that is connected to a wired network and is capable of providing wireless network access to client devices within the site.

To provide wireless networks 106, APs 142 are configured for wireless communication in one or more wireless frequency bands via WIFI protocols and non-WIFI protocols. For example, the wireless frequency bands may include, but are not limited to, a 2.4 GHz frequency band, a 5 GHz frequency band, a 6 GHz frequency band, and/or any other lower or higher frequency bands. Each frequency band is comprised of a plurality of channels. At any given time, each WIFI radio of each of APs 142 is assigned to operate (e.g., transmit and receive wireless signals) on a specific one of the plurality of channels. The channel assignments may be carried out by, for example, radio resource manager (RRM) 140 of NMS 130 or another RRM or similar module of one or more of NAS devices 108 or another computing device configured to manage radio resources in a wireless network.

In addition to one or more WIFI radios, APs 142 may be configured with one or more non-WIFI transceivers for wireless communication in accordance with one or more non-WIFI protocols. For example, the one or more non-WIFI protocols may include, but are not limited to electronic shelf label (ESL) high frequency (HF), BLUETOOTH, BLUETOOTH Low Energy (BLE), ultra-wideband (UWB), Zigbee, and/or other types of non-WIFI protocols. APs 142 may use the one or more non-WIFI transceivers to communicate with UEs 148 via the non-WIFI protocols. For example, an AP of APs 142 may include an ESL transceiver, e.g., either natively or connected via a USB port (also referred to as a "dongle"), to wirelessly communicate with ESL tags or devices via the ESL HF protocol.

Each site 102A-102N also includes a plurality of client devices, otherwise known as user equipment devices (UEs), referred to generally as client devices 148 or UEs 148, representing various wireless-enabled devices within each site. For example, a plurality of UEs 148A-1 through 148A-N are currently located at site 102A. Similarly, a plurality of UEs 148N-1 through 148N-N are currently located at site 102N. Each UE 148 may be any type of wireless client device, including, but not limited to, a mobile device such as a smartphone, tablet or laptop computer, a personal digital assistant (PDA), a wireless terminal, a smart watch, smart ring or other wearable device. UEs 148 may also include IoT client devices such as printers, security devices, environmental sensors, appliances, or any other device configured to communicate over one or more wireless networks 106.

UEs 148 may include devices that wirelessly communicate on wireless frequency bands via either WIFI protocols or non-WIFI protocols. UEs 148 may include devices, such as ESLs, that communicate using non-WIFI protocols on a same frequency band that also carries WIFI communications of UEs 148. For example, an ESL may communicate using an ESL HF protocol on the 2.4 GHz frequency band, which also carries WIFI communications, to obtain price updates and other information from a system that manages the ESL. UEs 148 may include ESLs that are compact devices configured to display product information (e.g., price, discounts, information regarding the product itself, etc.) via digital displays (e.g., electronic ink displays) received from a system that manages ESLs. An organization, such as a retail store may use ESLs to display product information while enabling the updating of the product information without requiring employees to physically adjust price tags (e.g., to enable automated real-time or near-time price adjustments).

In order to provide wireless network services to UEs 148 and/or communicate over the wireless networks 106, APs 142 and the other wired client-side devices at sites 102 are connected, either directly or indirectly, to one or more network devices (e.g., switches, routers, gateways, or the like) via physical cables, e.g., Ethernet cables. In the example of FIG. 1A, site 102A includes a switch 146A to which one or more of APs 142A-1 through 142A-M at site 102A may be connected, and switch 146A may, in turn, be connected to a router 147A. Similarly, site 102N includes a switch 146N to which one or more of APs 142N-1 through 142N-M at site 102N may be connected, and switch 146N may, in turn, be connected to a router 147N. Although illustrated in FIG. 1A as if each site 102 includes a single switch 146 and a single router 147, in other examples, each site 102 may include more or fewer switches and/or routers. In addition, the APs and the other wired client-side devices of the given site may be connected to two or more switches and/or routers. In some examples, interconnected switches and routers comprise wired local area networks (LANs) at sites 102 hosting wireless networks 106. In addition, two or more switches at a site may be connected to each other and/or connected to two or more routers, and two or more routers may be connected to each other and/or connected to other routers at other sites, e.g., via a mesh or partial mesh topology in a hub-and-spoke architecture, forming at least part of a wide area network (WAN).

Example network system 100 also includes various networking components for providing networking services within the wired network including, as examples, an Authentication, Authorization and Accounting (AAA) server 110 for authenticating users and/or UEs 148, a Dynamic Host Configuration Protocol (DHCP) server 116 for dynamically assigning network addresses (e.g., IP addresses) to UEs 148 upon authentication, a Domain Name System (DNS) server 122 for resolving domain names into network addresses, a plurality of servers 128A-128X (collectively "servers 128") (e.g., web servers, databases servers, file servers and the like), and NMS 130. As shown in FIG. 1A, the various devices and systems of network 100 are coupled together via one or more network(s) 104, e.g., the Internet and/or an enterprise intranet.

In the example of FIG. 1A, NMS 130 is a cloud-based computing platform that manages wireless networks 106A-106N at one or more of sites 102A-102N. As further described herein, NMS 130 provides an integrated suite of management tools and implements various techniques of this disclosure. In general, NMS 130 may provide a cloud-based platform for wireless network data acquisition, monitoring, activity logging, reporting, predictive analytics, network anomaly identification, and alert generation. In some examples, NMS 130 outputs notifications, such as alerts, alarms, graphical indicators on dashboards, log messages, text / SMS messages, email messages, and the like, and/or recommendations regarding wireless network issues to a site or network administrator ("admin") interacting with and/or operating admin device 111. Additionally, in some examples, NMS 130 operates in response to configuration input received from the administrator interacting with and/or operating admin device 111.

NMS 130 monitors network data associated with wireless networks 106A-106N at each site 102A-102N, respectively, to deliver a high-quality wireless network experience to end users, IoT devices and clients at the site. The network data may include a plurality of states or parameters indicative of one or more aspects of wireless network performance. The data may be obtained, collected, and/or received from numerous sources, including client devices, AP devices, switches, routers, gateways, firewalls, etc. The network data may be stored in a database, such as network data store 136 within NMS 130 or, alternatively, in an external database. In general, NMS 130 may provide a cloud-based platform for network data acquisition, monitoring, activity logging, reporting, predictive analytics, network anomaly identification, and alert generation. In some examples, NMS 130 uses a combination of artificial intelligence, machine learning, and data science techniques to optimize user experiences and simplify operations across any one or more of wireless access, wired access, and software defined wide area network (SD-WAN) domains.

The administrator and admin device 111 may comprise IT personnel and an administrator computing device associated with one or more of sites 102. Admin device 111 may be implemented as any suitable device for presenting output and/or accepting user input. For instance, admin device 111 may include a display. Admin device 111 may be a computing system, such as a mobile or non-mobile computing device operated by a user and/or by the administrator. Admin device 111 may, for example, represent a workstation, a laptop or notebook computer, a desktop computer, a tablet computer, or any other computing device that may be operated by a user and/or present a user interface in accordance with one or more aspects of the present disclosure. Admin device 111 may be physically separate from and/or in a different location than NMS 130 such that admin device 111 may communicate with NMS 130 via network 104 or other means of communication.

In some examples, one or more of NAS devices 108, e.g., APs 142, switches 146, and routers 147, may connect to edge devices 150A-150N via physical cables, e.g., Ethernet cables. Edge devices 150 comprise cloud-managed, wireless local area network (LAN) controllers. Each of edge devices 150 may comprise an on-premises device at a site 102 that is in communication with NMS 130 to extend certain microservices from NMS 130 to the on-premises NAS devices 108 while using NMS 130 and its distributed software architecture for scalable and resilient operations, management, troubleshooting, and analytics.

Each one of the network devices of network system 100, e.g., APs 142, switches 146, routers 147, UEs 148, edge devices 150, and any other servers or devices attached to or forming part of network system 100, may include a system log or an error log module wherein each one of these network devices records the status of the network device including normal operational status and error conditions. Throughout this disclosure, one or more of the network devices of network system 100, e.g., APs 142, switches 146, routers 147, and UEs 148, may be considered "third-party" network devices when owned by and/or associated with a different entity than NMS 130 such that NMS 130 does not directly receive, collect, or otherwise have access to the recorded status and other data of the third-party network devices. In some examples, edge devices 150 may provide a proxy through which the recorded status and other data of the third-party network devices may be reported to NMS 130.

Although the techniques of the present disclosure are described in this example as performed by NMS 130, techniques described herein may be performed by any other computing device(s), system(s), and/or server(s), and that the disclosure is not limited in this respect. For example, one or more computing device(s) configured to execute the functionality of the techniques of this disclosure may reside in a dedicated server or be included in any other server in addition to or other than NMS 130, or may be distributed throughout network 100, and may or may not form a part of NMS 130.

NMS 130 may include a virtual network assistant (VNA) 132 that analyzes network data received from one or more NAS devices 108, and in some cases UEs 148, in a wireless network, provides real-time insights and simplified troubleshooting for IT operations, and automatically takes remedial action or provides recommendations to proactively address wireless network issues. VNA 132 may, for example, include a network data processing platform configured to process hundreds or thousands of concurrent streams of network data from UEs 148, sensors and/or agents associated with AP devices 142 and/or nodes within network 104. Example SLE metrics may include time to connect, throughput, successful connects, capacity, AP health, and/or any other metric that may be indicative of one or more aspects of wireless network performance. The network service provider may further implement systems that automatically identify the root cause(s) of any SLE metrics that do not satisfy the thresholds, and/or that automatically implement one or more remedial actions to address the root cause, thus automatically improving wireless network performance. In some examples, VNA 132 may obtain SLE data from one or more of client devices 148.

Radio resource manager (RRM) 134 of NMS 130 may monitor one or more metrics for each site 102A-102N in order to learn and optimize the RF environment at each site. For example, RRM 134 may monitor coverage and capacity SLE metrics for a wireless network 106 at a site 102 based on interference observed by scan radios and/or data radios of APs 142 in order to identify potential issues with SLE coverage and/or capacity in the wireless network 106. RRM 134 may use the interference observed by the scan radios and/or data radios of APs 142 to make adjustments to the radio settings of the APs at each site to address the identified issues. For example, RRM 134 may determine channel and transmit power distribution across all APs 142 in each network 106A-106N. RRM 134 may monitor events, power, channel, bandwidth, and number of clients connected to each AP. RRM 134 may further automatically change or update configurations of one or more APs 142 at a site 102 with an aim to improve the coverage and capacity SLE metrics and thus to provide an improved wireless experience for the user.

RRM 134 may assign an operating channel for each transceiver or radio of each of APs 142 as part of managing wireless networks 106. RRM 134 may determine a wireless channel to assign to a wireless radio of an AP, e.g., AP 142A-1, based in part on information regarding channel interference from neighboring APs 142A at site 102A. In an example, AP 142A-1 experiences interference on its assigned operational channel caused by a neighbor AP that is assigned an overlapping channel on the same frequency band. In some examples, RRM 134 obtains network information from AP 142A-1 indicating that the AP is experiencing interference on its assigned channel. RRM 134 may determine that AP 142A-1 should be reassigned to a different channel to avoid the interference. RRM 134 determines an updated channel assignment for AP 142A-1 and instructs AP 142A-1 to switch to the updated channel assignment.

In some examples, RRM 134 may determine channel assignments for APs 142 on a periodic basis, e.g., hourly or daily. In other examples, RRM 134 may be asynchronously triggered to determine channel assignments for a portion of or the entirety of APs 142 based on one or more events or factors, such as indications of channel interference, a current operating channel being blacklisted, and/or other factors.

APs 142 managed by NMS 130 may experience reduced performance due to communications on overlapping WIFI and non-WIFI operating channels on the same frequency band. WIFI and non-WIFI wireless channels may overlap at one or more frequencies within the frequency band. APs 142 may communicate using both WIFI and non-WIFI protocols on the same frequency band. APs 142 may communicate over the frequency band shared by the non-WIFI and WIFI protocols via dongles and/or wireless interfaces of the APs. For instance, one or more APs 142 may be configured to communicate via WIFI on the 2.4 GHz, 5 GHz, and 6GHz frequency band while also being configured to communicate via the ESL HF protocol on the same frequency band as 2.4 GHz WIFI. For example, on the 2.4 GHz frequency band, WIFI channel 1 overlaps in frequency with ESL HF channels 0 and 1, and partially overlaps with ESL HF channel 2. Neighboring APs of APs 142 operating on both WIFI channel 1 and ESL HF channel 1 may cause interference and, thus, performance degradation due to a WIFI radio and a non-WIFI transceiver attempting to transmit and receive signals on similar frequencies using different wireless protocols. For instance, the performance degradation resulting from overlap of WIFI and ESL HF channels may cause communication sessions with UEs 148 to drop and/or substantially increase an amount of time needed for ESLs of UEs 148 to update displayed prices.

Conventional techniques for channel assignment may not consider the need for APs to provide wireless connectivity via both WIFI and non-WIFI protocols. Conventionally, administrators may attempt to manually configure APs or management systems to avoid overlaps between WIFI and non-WIFI channels. For example, an administrator may manually configure one or more APs to avoid transmitting on ESL HF channels 0, 1, and 2 to avoid interference with communications via 2.4 GHz WIFI channel 1. However, sites may include significant numbers of APs configured with non-WIFI transceivers, resulting in a tedious and time-consuming process for configuration. In addition, an administrator may find it challenging to determine which neighbor APs are configured with non-WIFI transceivers and to reconfigure the APs due to the time necessary for an AP to reset operating channels.

In accordance with the techniques of this disclosure, NMS 130 determines non-WIFI channel assignments for an AP. NMS 130 determines neighbor APs of the AP based on scan radio data for a frequency band at a site. RRM 134 determines a non-WIFI channel for the AP that does not interfere with operating WIFI and non-WIFI channels of the neighbor APs. RRM 134 sends a message to the AP for the AP to operate a non-WIFI transceiver on the non-WIFI channel.

NMS 130 may obtain data associated with channels of a frequency band from scan radios of APs 142 within network system 100. NMS 130 may use the scan radios to obtain data regarding multiple channels within a frequency band rather than solely relying on data radios tuned to operating channels. In an example, NMS 130 causes APs 142 to scan a plurality of channels included in the 2.4 GHz frequency band to determine usage of the channels. In some examples, NMS 130 may infer and/or correlate usage within a frequency band to usage of non-WIFI channels.

NMS 130 determines neighbor APs of one or more of APs 142 based on the scan radio data. NMS 130 may determine which of APs 142 are neighbors of a given AP based on one or more factors, such as whether received signal strength indicators (RSSIs) of communications received from other APs by the given AP satisfy a predetermined threshold. In an example, AP 142A-1 "hears" signals transmitted by other APs at site 102A and records the RSSIs of the signals and associated APs. AP 142-1 provides network data regarding the RSSIs to NMS 130 for NMS 130 to process. NMS 130 determines, based on the RSSIs, which APs are neighbors of AP 142A-1.

As part of determining neighbor APs, NMS 130 may identify APs that are configured to communicate via non-WIFI protocol(s). APs 142 may include APs that are configured to communicate via one or more non-WIFI protocol(s) and APs that are not configured to transmit via the non-WIFI protocol. For example, NMS 130 may determine that APs 142 include a subset of APs that are configured with transceivers (e.g., natively as part of the AP's radios or as peripheral devices connected to the AP, i.e., dongles, and/or otherwise configured with components) that enable communication via an ESL HF protocol while other APs are not so configured. NMS 130 may determine whether one or more of APs 142 include an ESL transceiver, a BLUETOOTH transceiver, a BLE transceiver, a UWB transceiver, a Zigbee transceiver, and/or other type of non-WIFI transceiver. NMS 130 may identify APs that include non-WIFI transceivers based on configuration information maintained by NMS 130.

NMS 130 may maintain configuration information regarding one or more components of network system 100 that includes indications of whether an AP is configured to communicate via non-WIFI protocols. NMS 130 may obtain the configuration information from the components of network system 100 and maintain the configuration information in one or more data stores of NMS 130. NMS 130 may maintain configuration information that includes configuration of transceivers of APs 142 (e.g., whether a given AP is configured with a non-WIFI transceiver), WIFI and non-WIFI operating channels of APs 142, and/or other information. NMS 130 may poll or otherwise cause APs 142 to report configuration information for inclusion in network data store 136. In some examples, NMS 130 may use network data based on keep-alive packets exchanged between APs 142 to determine current configurations of APs 142. NMS 130 may use the configuration information when managing the configuration of network system 100.

In some examples, NMS 130 generates a graph database of a frequency band as part of determining AP neighbors. NMS 130 may obtain scan radio data from APs 142 and process the scan radio data to generate a graph database for a frequency band. NMS 130 may generate the graph database as including indications of whether a given AP is configured to communicate via non-WIFI protocol(s) and indications of which APs are neighbor APs. In an example, AP 142A-1 uses a continuous scan radio to scan channels within the 2.4 GHz frequency band and generates scan radio data using the continuous scan radio. NMS 130 obtains the scan radio data and generates a graph database that indicates which APs at site 102A are neighbors of AP 142A-1. NMS 130 may generate the graph database of a frequency band for use in assigning WIFI channels and non-WIFI channels to APs 142.

NMS 130 determines whether a non-WIFI channel should be assigned to an AP. NMS 130 may determine whether a non-WIFI channel needs to be assigned in response to receiving an indication that a new AP has been added to a site, that an AP has been configured with a non-WIFI transceiver, and/or based on other factors. For instance, NMS 130 may determine that an ESL high frequency transceiver dongle has been connected to AP 142A-1 and that AP 142A-1 should be assigned an ESL high frequency channel.

NMS 130 uses RRM 134 to determine a non-WIFI channel on a frequency band to assign to a non-WIFI transceiver of an AP. RRM 134 may determine a non-WIFI channel that does not interfere with non-WIFI operating channels of non-WIFI transceivers of neighbor APs and WIFI operating channels of WIFI radios of the AP and of neighbor APs that operate on the same frequency band as the non-WIFI transceiver of the AP. As part of determining the non-WIFI channel, RRM 134 may identify one or more non-WIFI channels that do not overlap with the non-WIFI channels and WIFI channels assigned to AP and the neighbor APs. For instance, RRM 134 may determine whether a given non-WIFI channel at least partially overlaps with the range of frequencies included in a WIFI channel assigned to a WIFI radio of the AP and a WIFI channel and/or non-WIFI channel assigned to a neighbor AP, and refrain from assigning the non-WIFI channel as an operating channel to the non-WIFI transceiver of the AP. RRM 134 may send a message to the AP to configure non-WIFI transceiver of the AP to operate on the assigned non-WIFI channel.

In some examples, NMS 130 uses a feature enhancement for ESL channel assignment to enable RRM 134 to assign ESL channels and/or other types of non-WIFI channels. RRM 134 may be configured to treat ESL as a distinct frequency band for channel assignment such that RRM 134 will perform channel assignment for ESL, 2.4 GHz, 5,GHz, and 6 GHz, in that order. RRM 134 may be configured to assign an optimal ESL channel to an ESL transceiver of an AP taking into account the current WIFI channels assigned to the AP and neighbor APs and current non-WIFI channels assigned those neighbor APs that have ESL transceivers. RRM 134 may determine an optimal configuration for a WIFI radio of the AP that operates on the same frequency band as the ESL transceiver. RRM 134 may assign an optimal WIFI channel to the WIFI radio taking the ESL channel assignments both at the AP and at the neighbor APs into account along with the WIFI channel assignments at the neighbor APs. In other examples, RRM 134 may determine whether to cancel or convert the WIFI radio of the AP (e.g., convert the 2.4 GHz radio into a 5 GHz radio) based on WIFI coverage and/or capacity on the frequency band and the existence of an ESL transceiver at the AP operating on the frequency band.

In some examples, RRM 134 determines a configuration of an AP to reassign a non-WIFI operating channel. RRM 134 may determine whether a non-WIFI operating channel of an AP overlaps with and/or otherwise interferes with channel assignments of neighbor APs. Based on determining that a non-WIFI operating channel overlaps or otherwise interferes with WIFI and/or non-WIFI operating channels of neighbor APs, RRM 134 may determine a non-WIFI operating channel to reassign to the AP. In an example, RRM 134 determines that a non-WIFI operating channel assigned to AP 142A-1 overlaps with a non-WIFI operating channel of a neighbor AP of AP 142A-1 (AP 142A-M in this example). RRM 134 uses a graph database of the frequency band at site 102A to determine a new non-WIFI operating channel that does not overlap with the WIFI and non-WIFI channel assignments of AP 142A-M on the same frequency band. RRM 134 generates instructions configured to reassign the new non-WIFI operating channel to AP 142A-1 and provides the instructions included in a message to AP 142A-1. In some examples, RRM 134 sends a message to AP 142A-1 to cause AP 142A-1 to operate a non-WIFI transceiver on the assigned non-WIFI channel.

RRM 134 determines whether a WIFI channel should be assigned and/or reassigned to an AP. RRM 134 may use information that includes configuration information of APs 142, a graph databases of one or more frequency bands, coverage and capacity data on the frequency band, and/or other information to determine whether a channel should be assigned and/or reassigned to one or more of APs 142. RRM 134 may determine that a WIFI channel assigned to an AP should be reassigned based on one or more factors that include determining a WIFI operating channel of an AP operates on the same range of frequencies as a non-WIFI operating channel of the AP (e.g., 2.4 GHz WIFI and ESL high frequency), that a WIFI operating channel of the AP interferes with a WIFI operating channel and/or non-WIFI operating channel of neighboring APs, and/or other factors. RRM 134 may determine an operating channel with which to configure the radio of the AP based at least in part of the WIFI and/or non-WIFI operating channels assigned to the AP and the neighbor APs of the AP. RRM 134 may use information regarding the non-WIFI transceivers (e.g., a graph database, network information, etc.) to assign an WIFI operating channel to the AP while avoiding a channel assignment that overlaps with WIFI and/or non-WIFI channel assignments of the AP and the neighbor APs (e.g., to avoid assigning a WIFI channel that includes frequencies that are also included in non-WIFI channels assigned to the AP and/or the neighbor APs). For instance, NMS 120 may determine a WIFI channel to assign AP 142A-1 such that the WIFI radio of AP 142A-1 does not interfere with non-WIFI channels assigned to a WIFI transceiver of AP 142A-1 and/or the operating channels of non-WIFI transceivers of neighbor APs at site 102A. Based on determine the WIFI channel, NMS 130 may provide or send a message to AP 142A-1 to cause AP 142A-1 to operate the WIFI radio on the assigned WIFI channel.

The techniques of this disclosure may enable one or more technical improvements that provide at least one practical application. For example, the use of scan radios to obtain data regarding relatively high usage at particular frequencies that translate to a non-WIFI channel may enable NMS 130 to obtain relatively greater view into a radio frequency environment and consider the impact of non-WIFI devices when configuring the radio frequency environment. In another example, the techniques may enable NMS 130 to optimize channel assignment across both WIFI channels and non-WIFI channels and avoid assigning WIFI and non-WIFI channels that overlap in frequency. Rather than requiring an administrator to manually assign channels to avoid overlap, NMS 130 provides automated channel assignment to avoid overlapping channel assignments between WIFI and non-WIFI channels and improve wireless performance by avoiding interference between WIFI and/or non-WIFI channels.

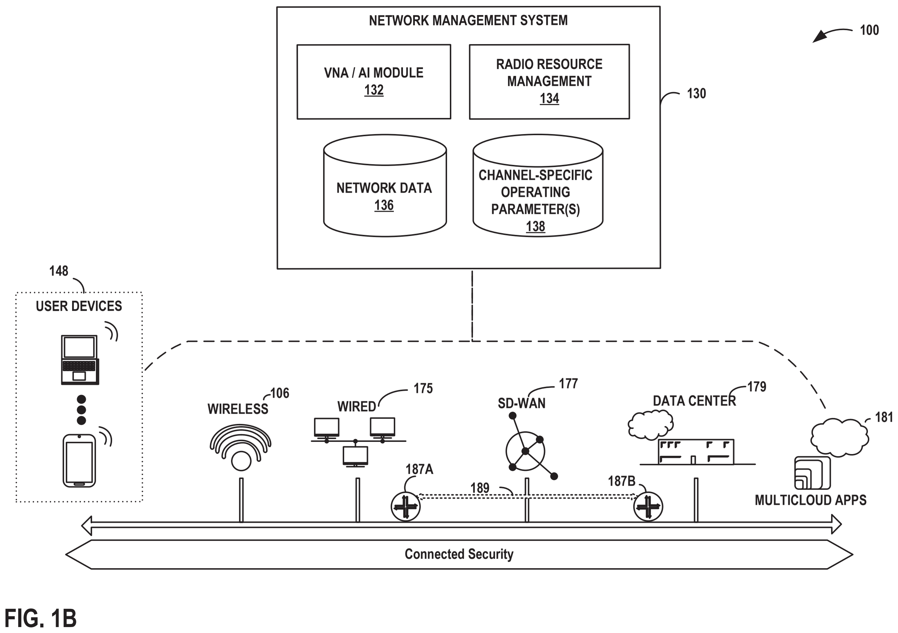

FIG. 1B is a block diagram illustrating further example details of the network system of FIG. 1A. As described above with respect to FIG. 1A, NMS 130 executing radio resource management module 134, optimizes one or more operating parameters of APs 142 in a wireless network 106 on a per channel basis in accordance with one or more techniques of the disclosure.

In this example, FIG. 1B illustrates NMS 130 configured to operate according to an artificial intelligence / machine-learning-based computing platform providing comprehensive automation, insight, and assurance (Wi-Fi Assurance, Wired Assurance and WAN assurance) spanning from wireless network 106 and wired LAN 175 networks at the network edge (far left of FIG. 1B) to cloud-based application services 181 hosted by computing resources within data centers 179 (far right of FIG. 1B). NMS 130 includes a virtual network assistant 132, radio resource management module 134, network data 136, and channel-specific operating parameters 138. Channel-specific operating parameters 138 include one or more optimized operating parameters determined for each specific channel of a given frequency band determined and/or applied in accordance with one or more techniques of the disclosure.

As described herein, NMS 130 provides an integrated suite of management tools and implements various techniques of this disclosure. In general, NMS 130 may provide a cloud-based platform for wireless network data acquisition, monitoring, activity logging, reporting, predictive analytics, network anomaly identification, and alert generation. For example, network management system 130 may be configured to proactively monitor and adaptively configure network 100 so as to provide self-driving capabilities. Moreover, VNA 133 includes a natural language processing engine to provide AI-driven support and troubleshooting, anomaly detection, AI-driven location services, and AI-drive RF optimization with reinforcement learning. In some examples, NMS 130 manages both WIFI and non-WIFI channel assignments and determine channel-specific operating parameters 138 for non-WIFI channels.

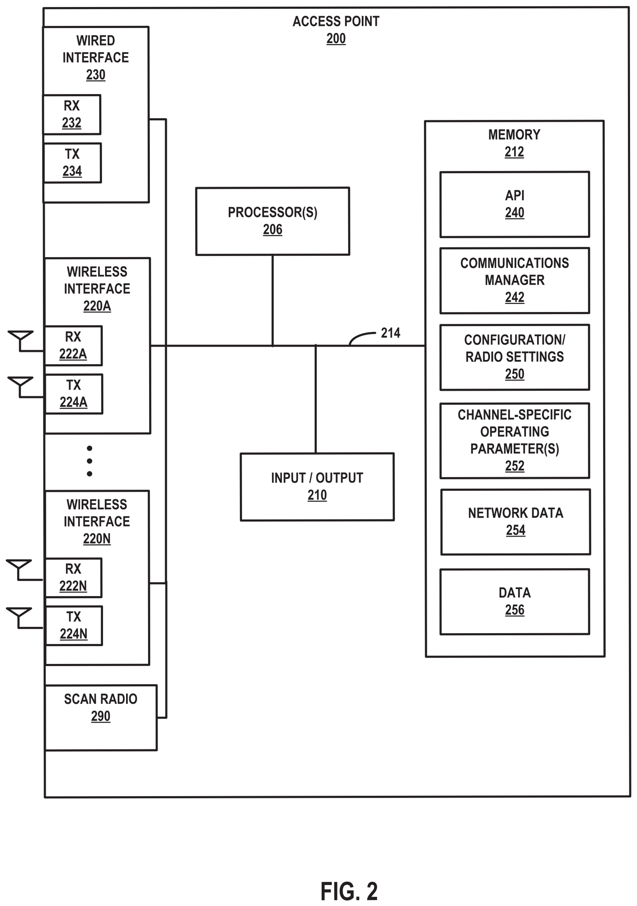

FIG. 2 is a block diagram of an example access point (AP) device 200 configured in accordance with one or more techniques of the disclosure. Example access point 200 shown in FIG. 2 may be used to implement any of AP devices 142 as shown and described herein with respect to FIG. 1A. Access point device 200 (alternatively referred to as "access point 200" or "AP 200") may comprise, for example, a Wi-Fi, Bluetooth and/or Bluetooth Low Energy (BLE) base station, UWB base station, ESL high-frequency base station, Zigbee base station, or any other type of wireless access point.

In the example of FIG. 2, access point device 200 includes a wired interface 230, wireless interfaces 220A-220B (alternatively referred to as "data radios"), scan radio 290 (alternatively referred to as a "continuous scan radio"), one or more of non-WIFI transceivers 292, one or more processor(s) 206, memory 212, and input/output 210, coupled together via a bus 214 over which the various elements may exchange data and information. Wired interface 230 represents a physical network interface and includes a receiver 232 and a transmitter 234 for sending and receiving network communications, e.g., packets. Wired interface 230 couples, either directly or indirectly, access point device 200 to network(s) 104 of FIG. 1A. Wireless interfaces 220A-220N represent wireless network interfaces and include receivers 222A-222N, respectively, each including a receive antenna via which access point 200 may receive wireless signals from wireless communications devices, such as UEs 148 of FIG. 1A, other APs 200, and/or any other wireless device. Wireless interfaces 220A-220N further include transmitters 224A-224N, respectively, each including transmit antennas via which access point 200 may transmit wireless signals to wireless communications devices, such as UEs 148 of FIG. 1A, other APs 200, and/or any other wireless device. In some examples, wireless interfaces 220A-220N may include one or more Wi-Fi 802.11 interfaces (e.g., 2.4 GHz, 5 GHz and/or 6 GHz) one or more Bluetooth interfaces, BLE interfaces, ESL high frequency interfaces, Zigbee interfaces, UWB interfaces, and/or other types of interfaces. For instance, wireless interfaces 220A-220N may include non-WIFI transceivers configured to transmit and receive according to non-WIFI protocols. One or more of the interfaces 220A-220N may be used to perform RTT measurements. However, these are given for example purposes only, and the disclosure is not limited in this respect.

AP 200 may use a data radio of wireless interfaces 220 to observe a channel used by wireless interfaces 220 for communicating data. AP 200 may use data radios of wireless interfaces 220 to observe one or more types of interference within wireless environment of AP 200, such as non-WIFI interference, undecodable WIFI interference, unknown WIFI interference, a noise floor of the wireless environment, and/or other types of interference, and generate data based on the recorded interference. For example, AP 200 may use a data radio of wireless interface 220A to observe wireless channels assigned to AP 200 and generate data regarding the performance of the channel. AP 200 may may use the data radios of wireless interfaces 220 to generate comparatively higher detailed data than scan radios of AP 200 (e.g., as data radios of AP 200 may be tuned to a particular channel of a frequency longer than a scan radio of AP 200).

Scan radio 290 may be a component of AP 200 that listens or scans a wireless environment of AP 200. AP 200 may use scan radio 290 to observe a plurality of channels in a wireless environment of AP 200 for use in generating data that includes metrics regarding the wireless environment of AP 200. AP 200 may generate data based on the quality or performance of channels scanned by scan radio 290 beyond the channels assigned to wireless interfaces. For instance, AP 200 may use scan radio to record interference observed on each channel in a wireless environment of AP 200. AP 200 may use the data radios of wireless interfaces 220 to generate comparatively detailed data regarding an assigned or current channel and use scan radio 290 to generate comparatively less detailed data for a number of channels of a frequency band (e.g., scan radio 290 may observe numerous channels over the same period of time a data radio obtains data regarding a more limited number of channels). For instance, AP 200 may use the data radio to record interference observed on an operating channel. While illustrated as a separate component, in some examples AP 200 may use one or more of wireless interfaces 220 as scan radio 290.

Processor(s) 206 are programmable hardware-based processors configured to execute software instructions, such as those used to define a software or computer program, stored to a computer-readable storage medium (such as memory 212), such as computer-readable mediums including a storage device (e.g., a disk drive, or an optical drive) or a memory (such as Flash memory or RAM) or a transmission medium (such as bus 414 and/or any of interfaces 220, 230) or any other type of volatile or non-volatile memory, that stores instructions to cause the one or more processors 206 to perform one or more of the techniques described herein.

Memory 212 includes one or more devices configured to store programming modules and/or data associated with operation of access point device 200. For example, memory 212 may include a computer-readable storage medium, such as non-transitory computer-readable mediums including a storage device (e.g., a disk drive, or an optical drive) or a memory (such as Flash memory or RAM) or any other type of volatile or non-volatile memory, that stores instructions to cause the one or more processor(s) 206 to perform one or more of the techniques described herein.

In this example, memory 212 stores executable software and/or data including an application programming interface (API) 240, a communications manager 242, configuration/radio settings 250, channel operating parameters 252, network data 254, and data storage 256. In some examples, network data 254 includes any type of data measured or collected by AP 200 including, for example, received signal strength indicators (RSSIs) of wireless signals received from one or more other APs in the wireless network, RSSIs of wireless signals received from one or more wireless clients (UEs). For instance, AP 200 may store data that includes metrics regarding the quality (e.g., performance) of one or more channels in network data 254. Data 256 may further store any data used and/or generated by access point device 200, including data collected from UEs 148 and/or one or more other APs 200.

AP 200 may provide data regarding the quality of channels to an NMS, such as NMS 130 as illustrated in FIGS. 1A-1B. AP 200 records information regarding interference in channels of a frequency band using a data radio and a scan radio. In some examples, AP 200 may record information regarding usage levels within a frequency band for use by NMS 130 in inferring and/or correlating the usage to interference between WIFI and non-WIFI channels using scan radio 290.

Communications manager 242 includes program code that, when executed by processor(s) 206, allow access point 200 to communicate with UEs 148, other APs 142, and/or network(s) 104 via any of interface(s) 230 and/or 220A-220B. Configuration settings 250 include any device settings for access point 200 such as default or adjusted radio settings for each of wireless interface(s) 220A-220B. In accordance with one or more techniques of the disclosure, channel-specific operating parameters 252 include one or more optimized operating parameters (e.g., transmit power optimizations) determined for each specific channel of a given frequency band in accordance with one or more techniques of the disclosure. In the event AP 200 is configured to communicate over multiple frequency bands, such as the 2.4 GHz, 5 GHz, and/or 6 GHz frequency bands, channel-specific operating parameters 252 may include channel-specific operating parameters for each of the frequency bands over which AP 200 is configured to communicate. In some examples, channel-specific operating parameters 252 include optimized operating parameters for non-WIFI channels.

NMS 130 executing radio resource management module 134, for example, may determine these channel-specific optimized operating parameters as described with respect to FIGS. 1A and 1B. In some examples, NMS 130 updates the optimized operating parameters stored in channel operating parameters on a continuous, periodic, or scheduled basis.

AP 200 may receive channel assignments from NMS 130. NMS 130 may determine one or more channel assignments for AP 200 based on data received from AP 200 and/or other information and provide an indication of the channel assignments to AP 200. AP 200 may reconfigure one or more components (e.g. wireless interfaces 220) to operate in accordance with the channel assignments.

Input / output (I/O) 210 represents physical hardware components that enable interaction with a user, such as buttons, a touchscreen, a display and the like. Although not shown, memory 212 typically stores executable software for controlling a user interface with respect to input received via I/O 210.

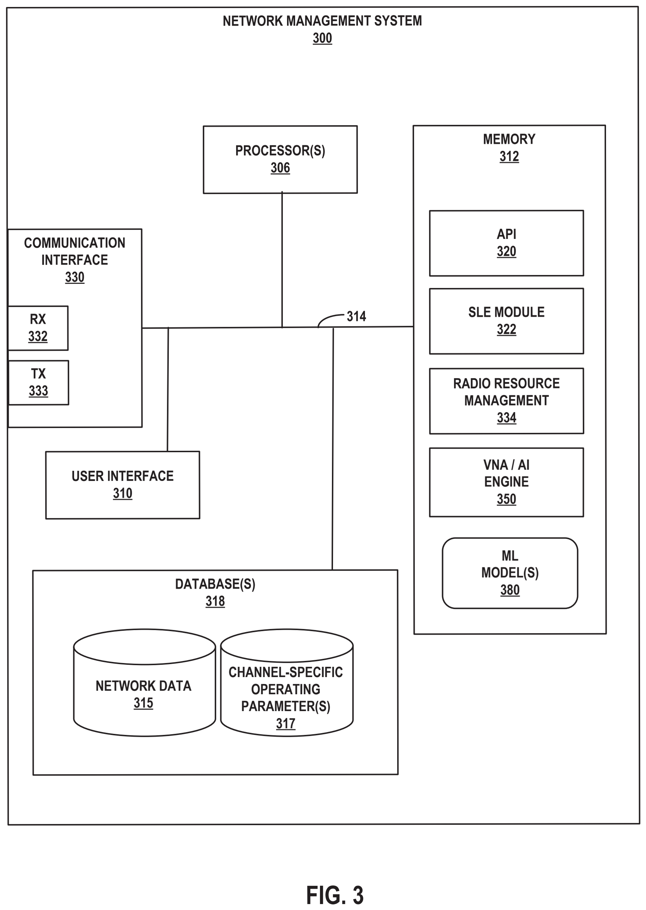

FIG. 3 is a block diagram of an example network management system (NMS) 300 configured to optimize one or more operating parameters for a plurality of APs in a wireless network on a per channel basis in accordance with one or more techniques of the disclosure. For example, NMS 300 is configured to optimize one or more operating parameters for a plurality of APs based on the specific channel assignments for each of the APs. NMS 300 may be used to implement, for example, NMS 130 in FIGS. 1A-1B. In such examples, NMS 300 is responsible for monitoring and management of one or more wireless networks 106A-106N at sites 102A-102N, respectively. In some examples, NMS 300 receives network data 315 collected by APs 142/200 and analyzes this data for cloud-based management of wireless networks 106A-106N. In some examples, NMS 300 may be part of another server shown in FIG. 1A, 1B or a part of any other server.

NMS 300 includes a communications interface 330, one or more processor(s) 306, a user interface 310, a memory 320, and a database 318. The various elements are coupled together via a bus 314 over which the various elements may exchange data and information.

Databases 318 include storage for data in connection with monitoring and management of wireless networks 106. Network data 315 includes any type of data measured or collected by APs 142/200 including, for example, received signal strength indicators (RSSIs) of wireless signals communicated between APs 142, RSSIs of wireless signals communicated between APs 142 and UEs 148, etc. Data 256 may further store any data used and/or generated by access point device 200, including data collected from UEs 148 and/or one or more other APs 200. In accordance with one or more techniques of the disclosure, channel-specific operating parameters 317 include one or more optimized operating parameters (e.g., transmit power optimizations) determined for each specific channel of a given frequency band. In some examples, channel-specific operating parameters 317 include channel-specific operating parameters for each of one or more frequency bands, such as the 2.4 GHz, 5 GHz, or 6 GHz frequency bands, and/or any other wireless frequency band, such as non-WIFI frequency bands.

Processor(s) 306 execute software instructions, such as those used to define a software or computer program, stored to a computer-readable storage medium (such as memory 320), such as computer-readable mediums including a storage device (e.g., a disk drive, or an optical drive) or a memory (such as Flash memory or RAM) or a transmission medium (such as bus 414 and/or interface 330) or any other type of volatile or non-volatile memo, that stores instructions to cause the one or more processors 306 to perform the techniques described herein.

Communications interface 330 may include, for example, an Ethernet interface. Communications interface 330 couples NMS 300 to a network and/or the Internet, such as any of network(s) 104 as shown in FIG. 1A, and/or any local area networks. Communications interface 330 includes a receiver 332 and a transmitter 333 by which NMS 300 receives/transmits data and information to/from any of AP devices 142, servers 110, 116, 122, 128 and/or any other devices or systems forming part of network 100 such as shown in FIGS. 1A-1B. The data and information received by NMS 300 may include, for example, network data and/or event log data received from APs 142 used by NMS 300 to remotely monitor and/or control the performance of wireless networks 106A-106N and to determine the locations of APs 142. NMS may further transmit data via communications interface 330 to any of network devices such as APs 142 at any of network sites 102A-102N to remotely manage wireless networks 106A-106N.

Memory 320 includes one or more devices configured to store programming modules and/or data associated with operation of NMS 300. For example, memory 320 may include a computer-readable storage medium, such as non-transitory computer-readable mediums including a storage device (e.g., a disk drive, or an optical drive) or a memory (such as Flash memory or RAM) or any other type of volatile or non-volatile memory, that stores instructions to cause the one or more processor(s) 306 to perform the techniques described herein.

In this example, memory 312 includes an API 320, an SLE module 322, a radio resource management module (RRM) 334, a virtual network assistant (VNA)/AI engine 350, and one or more machine learning models 380. NMS 300 may also include any other programmed modules, software engines and/or interfaces configured for remote monitoring and management of wireless networks 106A-106N, including remote monitoring and management of any of AP devices 142.

In accordance with one or more techniques of the disclosure, RRM 334 further includes program instructions that, when executed by one or more processors of NMS 300 and/or any other computing device, determine WIFI channel assignments and non-WIFI channel assignments for APs. For example, RRM 334 may determine non-WIFI channel assignments and WIFI channel assignments for an AP that avoid overlapping of or interference with currently assigned WIFI and non-WIFI channels of the AP and neighbor APs.

VNA/AI engine 350 analyzes network data received from AP devices 142 as well as its own data to monitor performance of wireless networks 106A-106N. For example, VNA engine 350 may identify when anomalous or abnormal states are encountered in one of wireless networks 106A-106N. VNA/AI engine 350 may use a root cause analysis module (not shown) to identify the root cause of any anomalous or abnormal states. In some examples, the root cause analysis module utilizes artificial intelligence-based techniques to help identify the root cause of any poor SLE metric(s) at one or more of wireless networks 106A-106N. In addition, VNA/AI engine 350 may automatically invoke one or more remedial actions intended to address the identified root cause(s) of one or more poor SLE metrics. Examples of remedial actions that may be automatically invoked by VNA/AI engine 350 may include, but are not limited to, invoking RRM 334 to reboot one or more AP devices and/or adjust/modify the transmit power of a specific radio in a specific AP device, adding service set identifier (SSID) configuration to a specific AP device, changing channels on an AP device or a set of AP devices, etc. The remedial actions may further include restarting a switch and/or a router, invoke downloading of new software to an AP device, switch, or router, etc. These remedial actions are given for example purposes only, and the disclosure is not limited in this respect. If automatic remedial actions are not available or do not adequately resolve the root cause, VNA/AI engine 350 may proactively and automatically provide a notification including recommended remedial actions to be taken by IT personnel to address the anomalous or abnormal wireless network operation.

SLE (service level experience) module 322 enables set up and tracking of thresholds for one or more SLE (e.g., performance) metrics for each of wireless networks 106A-106N. SLE module 322 further analyzes network data (e.g., stored as network data 316) collected by AP devices and/or UEs associated with wireless networks 106A-106N, such as any of AP devices 142 from UEs 148 in each wireless network 106A-106N. For example, AP devices 142A-1 through 142A-N collect network data from UEs 148A-1 through 148A-N currently associated with wireless network 106A (e.g., named assets, connected/unconnected Wi-Fi clients). This data, in addition to any network data collected by one or more APs 142A-1 through 142A-N in wireless network 106A, is transmitted to NMS 300 and stored as, for example, network data 315.

NMS 300 executes SLE module 322 to determine one or more SLE metrics for each UE 148 associated with a wireless network 106. One or more of the SLE metrics may further be aggregated to each AP device at a site to gain insight into contribution of each AP device to wireless network performance at the site. The SLE metrics track whether the service level for each particular SLE metric meets the configured threshold value(s). In some examples, each SLE metric may further include one or more classifiers. If a metric does not meet the configured SLE threshold value for the site, the failure may be attributed to one of the classifiers to further understand how and/or why the failure occurred.

In some examples, RRM 334 uses information regarding the configuration of APs when determining channel assignments. RRM 334 may use configuration information regarding which APs are configured with non-WIFI transceivers, as only a subset of APs within a given site may be equipped with non-WIFI transceivers. RRM 134 may use the information regarding the configuration of APs to determine both WIFI channel assignments and non-WIFI channel assignments.

RRM 334 may use one or more equations to determine WIFI and non-WIFI channel assignments and bias the channel assignments towards uniformity. RRM 334 may use the equations to evenly distribute channel assignments throughout a frequency band as opposed to assigning channels that overlap or are otherwise nearby on a frequency spectrum. For instance, RRM 334 may distribute 2.4 GHz channel assignments to assign WIFI channels 1, 6, and 11 that do not overlap in frequency rather than WIFI channels 1, 2, and 3 which overlap in frequency. RRM 334 may use one or more equations, such as the below, to determine WIFI and ESL high frequency channel assignments and bias the assignments towards uniformity. RRM 344 may use Equation 1 to determine channel assignments for a pair of APs (labeled as *i* and*j*): $minimize {\sum }_{i ∈ {N}_{esl}} \left\{{\sum }_{j ∈ {N}_{{i}_{24}}} {α}_{ij} O \left({C}_{esl , i}, {C}_{esl , j}\right) + {β}_{i , j} O \left({C}_{esl , i}+{C}_{24 , j}\right) + λU \left(i\right)\right\}$ where *C* represents a channel of the AP, *α* and *β* are weights in the function, and where *λU*(*i*) is a predetermined function to bias towards channel uniformity when selecting a channel for AP *i*. RRM 334 may determine *α* and *β* as predetermined weights or as variable weights based on received signal strength indicators (RSSIs) indicative of closeness of APs *i* and *j* (e.g., NMS 130 may determine *α* and *β* as relatively higher values when RSSIs between APs *i* and *j* are relatively high). RRM 334 may use the sub-functions *O*(*C_{esl,i}, C_{esl,j}*) to determine channel overlap between ESL channels of APs *i* and *j* and *O*(*C_{esl,i}* + *C*_{24,*j*}) to determine channel overlap between a ESL channels of AP *i* and 2.4 GHz channels of AP *j.* Furthermore, RRM 334 may use the function *λU*(*i*) to bias the selection of channels towards uniformity.

RRM 134 may use an equation, such as Equation 1, to assign channels based on a series of probabilities associated with each channel, with non-overlapping WIFI and non-WIFI channels given increased probability of assignment (e.g., to bias towards uniform channel assignments). While discussed above in the context ESL channel assignment, RRM 334 may extend the use of similar equations to determine other non-WIFI channel assignments (e.g., UWB, BLUETOOTH, BLE, etc.). For instance, RRM 334 may assign the following channels according to Table I below and one or more scenarios:

**Table I**

| ESL Channel | Radio Channel |
|---|---|
| [0,1] | [6,11] |
| [2,3] | [11] |
| [4,5] | [1,11] |
| [6,7,8,9,10] | [1,6] |

In a first scenario, RRM 334 determines channel assignments without RF templates mapped to a site. RRM 334 may map WIFI radio channels according to above ESL channels of Table I. In the case of rebooted APs, RRM 334 may keep ESL channels the same and map WIFI radio channels according to an associated ESL channel.

In a second scenario, RRM 334 determines channel assignments with RF templates mapped to a site. RRM 334 may map WIFI radio channels according to the ESL channels of Table I above. When rebooting APs, RRM 334 may keep ESL channels the same and map WIFI radio channels according to an associated ESL channel.

In a third scenario, RRM 334 determines channel assignments and overrides device profile radio settings. RRM 334 may map WIFI radio channels according to the ESL channels of Table I. When rebooting APs, RRM 334 may keep ESL channels the same and map WIFI radio channels according to an associated ESL channel.

In some examples, RRM 334 determines which APs at a site have ESL transceivers based on configuration information of the APs having native ESL transceivers and/or based on indications received from APs including ESL dongles (e.g., ESL transceivers plugged into the APs via USB dongles). RRM 334 may maintain a table of ESL operating channel assignments for the APs with ESL transceivers. RRM 334 may build an RRM graph database based on scan radio data obtained from one or more APs at a site. For example, the RRM may build a 2.4 GHz graph based on scan radio data of all channels in the 2.4 GHz frequency band and may build a 5 GHz graph based on scan radio data of all channels in the 5 GHz
frequency band. In some examples, RRM 334 may build the graph database based on an RF spectrum capture of the frequency band. For instance, RRM 334 may build a dedicated ESL graph database based on scan radio data of all ESL channels.

For an AP having an ESL transceiver, RRM 334 identifies neighbor APs of the AP at the site based on the scan radio data and determines which APs of the neighbor APs have ESL transceivers and the ESL operating channels based on the configuration data. RRM 334 will then select an optimal ESL channel on the frequency band (e.g., 2.4 GHz) for the ESL transceiver of the AP to not overlap with the ESL operating channels of the neighbor APs with ESL transceivers and to not overlap with WIFI operating channels of the AP or the neighbor APs. RRM 334 may then determine a configuration for a WIFI radio of the AP that operates on the same frequency band (e.g., 2.4 GHz). In some examples, RRM 334
selects an optimal WIFI channel for the WIFI radio of the AP to not overlap with the ESL channel assignment of the ESL transceiver on the same AP and/or the ESL operating channels of the neighbor APs with ESL transceivers to avoid interference between ESL and the WIFI on the same frequency band. RRM 334 may also take into account WIFI operating channels for WIFI radios of the neighbor APs and non-WIFI interference when assigning the WIFI channel to the WIFI radio of the AP. RRM 334 may then go on to assign WIFI channels for WIFI radios operating on other frequency bands (e.g., 5 GHz, 6 GHz).

In a scenario where RRM 334 is reassigning all channel assignments, RRM 334 may begin the channel reassignment processes at an AP having an ESL transceiver in a most densely populated area of the site. For a new AP (e.g., a newly configured AP) with an ESL transceiver (either native or USB dongle), RRM 334 may not have scan data and may not know the neighbor APs of the new AP. RRM 334 may randomly select an ESL channel on a frequency band for the ESL transceiver of the new AP and then select a WIFI channel for a WIFI radio on the same frequency band to not overlap the ESL channel. RRM 334 then waits until scan data is available for the frequency band (e.g., 30 minutes) and rerun the channel assignment process to optimize ESL and WIFI channel assignments for the new AP.

In some examples, RRM 334 uses the existence of an ESL transceiver on the AP as one factor to determine whether to disable or convert the WIFI radio operating on the same frequency band as the ESL transceiver. As an example, after selecting the optimal channel for the ESL transceiver operating on the 2.4 GHz frequency band, RRM 334 may consider coverage on the 2.4 GHz frequency band and capacity or usage of the 2.4 GHz frequency band by a cluster that includes the AP and its neighbor APs, along with capacity or usage of the 5 GHz and/or 6 GHz frequency bands by the same cluster, to determine whether to
cancel one or more of the 2.4 GHz radios and convert to a 5 GHZ radio within the cluster. RRM 334 may consider the existence of the ESL transceiver at the AP to determine which of the 2.4 GHz radios within the cluster to cancel.

In some examples, RRM 334 executes a process to optimize the selection of WIFI and non-WIFI channels. For instance, RRM 334 may execute code such as the below to optimize the selection of ESL high frequency and WIFI channels:

```
        {
              "mac": "a67ef14",
              "power": {
                 "min_power": 3,
                 "max_power": 18
              },
              "dfs_ok": true,
              "band_24_usage": "24",
              "no_valid_channels": false,
              "map_id": "cs39-246g-abc1",
              "x_m": 32,
              "y_m": 34,
              "height": 2.75,
              "radio_stat": {
                 "band": "24",
                 "channel": 1,
                 "bandwidth": 20,
                 "power": 3,
                 "num_clients": 0
              },
              "radio_config": {
                 "channel": 0,
                 "bandwidth": 20,
                 "power": 0
              },
              "native_esl_enabled": false,
              "esl_channel": 10
            {
              "mac": "aa17bce23",
              "power": {
                 "min_power": 3,
                 "max_power": 18
              },
              "dfs_ok": true,
              "band_24_usage": "24",
              "no_valid_channels": false,
              "map_id": " cs39-246g-abc1",
              "x_m": 44,
              "y_m": 37,
              "height": 2.75,
              "radio_stat": {
                 "band": "24",
                 "channel": 11,
                 "bandwidth": 20,
                 "power": 3,
                 "num_clients": 0
              },
              "radio_config": {
                 "channel": 0,
                 "bandwidth": 20,
                 "power": 0
              },
              "native_esl_enabled": false,
              "esl_channel": -1
    }.
```

In some examples, RRM 334 determines whether to cancel (e.g., disable) a WIFI radio of an AP. RRM 134 may determine coverage and capacity on a frequency band for a cluster of APs (e.g., a cluster of neighbor APs based on a graph database) that includes an AP and neighbor APs of the AP. RRM 134 may determine whether the coverage and capacity of the APs satisfies one or more thresholds (e.g., whether the APs provide sufficient coverage and capacity for the UEs connected to the APs). Based on one or more APs that have non-WIFI transceivers and the coverage and capacity on the frequency band, RRM 134 determines whether to cancel the WIFI radio of the AP that operates on the frequency band. In an example, RRM 134 determines that coverage and capacity for the 2.4 GHz frequency band for a cluster of APs satisfies a predetermined threshold for coverage and capacity. RRM 134 may determines that the WIFI radio of the AP should be canceled based on the coverage and capacity for the 2.4 GHz frequency band and instructs the AP to cancel the WIFI radio. In some examples, RRM 134 may configure a WIFI data radio of an AP to operate as a scan radio instead of canceling the WIFI radio.

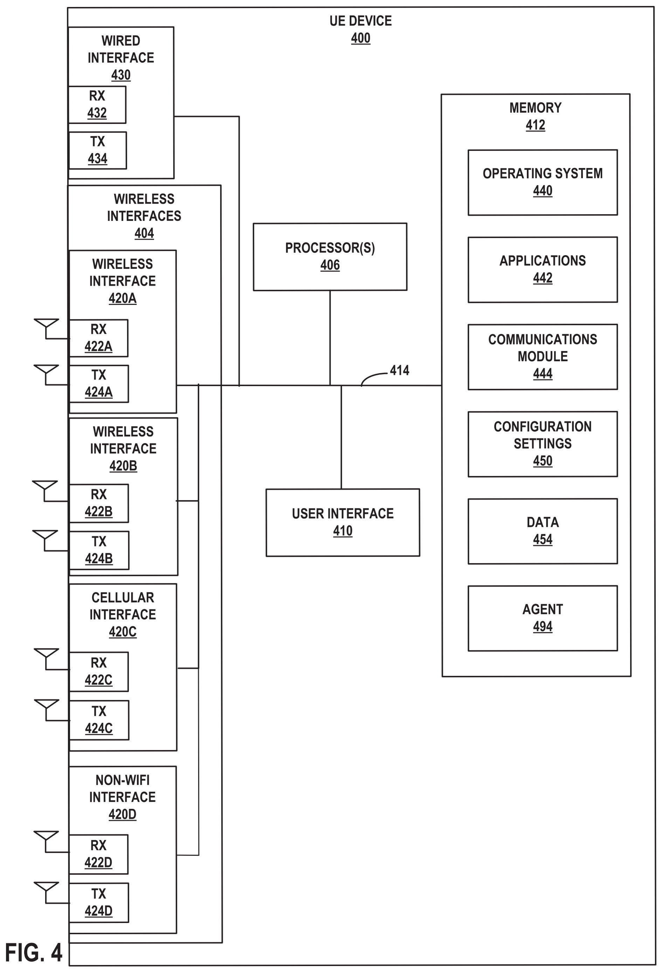

FIG. 4 shows an example user equipment (UE) device 400. Example UE device 400 shown in FIG. 4 may be used to implement any of UEs 148 as shown and described herein with respect to FIG. 1. UE device 400 may include any type of wireless client device, and the disclosure is not limited in this respect. For example, UE device 400 may include a mobile device such as a smart phone, tablet or laptop computer, a personal digital assistant (PDA), a wireless terminal, a smart watch, a smart ring or any other type of mobile or wearable device. UE 400 may also include any type of IoT client device such as a printer, a security sensor or device, an environmental sensor, or any other connected device configured to communicate over one or more wireless networks.

UE device 400 includes a wired interface 430, wireless interfaces 420A-420D, one or more processor(s) 406, memory 412, and a user interface 410. The various elements are coupled together via a bus 414 over which the various elements may exchange data and information. Wired interface 430 includes a receiver 432 and a transmitter 434. Wired interface 430 may be used, if desired, to couple UE 400 to network(s) 104 of FIG. 1. First, second, third, and fourth wireless interfaces 420A, 420B, 420C, 420D include receivers 422A, 422B, 422C, and 422D, respectively, each including a receive antenna via which UE 400 may receive wireless signals from wireless communications devices, such as AP devices 142 of FIG. 1, AP device 200 of FIG. 2, other UEs 148, or other devices configured for wireless communication. First, second, third, and fourth wireless interfaces 420A, 420B, 420C, and 420D further include transmitters 424A, 424B, 424C, and 420D, respectively, each including transmit antennas via which UE 400 may transmit wireless signals to wireless communications devices, such as AP devices 142 of FIG. 1, AP device 200 of FIG. 2, other UEs 148 and/or other devices configured for wireless communication. In some examples, first wireless interface 420A may include a Wi-Fi 802.11 interface (e.g., 2.4 GHz and/or 5 GHz) and second wireless interface 420B may include a Bluetooth interface and/or a Bluetooth Low Energy interface. Third wireless interface 420C may include, for example, a cellular interface through which UE device 400 may connect to a cellular network. Fourth wireless interface 420D may include, for example, any number of non-WIFI interfaces, such as UWB, ESL high frequency, and/or other types of non-WIFI interfaces.

Processor(s) 406 execute software instructions, such as those used to define a software or computer program, stored to a computer-readable storage medium (such as memory 412), such as computer-readable mediums including a storage device (e.g., a disk drive, or an optical drive) or a memory (such as Flash memory or RAM) or a transmission medium (such as bus 414 and/or any of interfaces 420, 430) or any other type of volatile or non-volatile memo, that stores instructions to cause the one or more processors 406 to perform the techniques described herein.

Memory 412 includes one or more devices configured to store programming modules and/or data associated with operation of UE 400. For example, memory 412 may include a computer-readable storage medium, such as non-transitory computer-readable mediums including a storage device (e.g., a disk drive, or an optical drive) or a memory (such as Flash memory or RAM) or any other type of volatile or non-volatile memory, that stores instructions to cause the one or more processor(s) 406 to perform the techniques described herein.

In this example, memory 412 includes an operating system 440, applications 442, a communications module 444, configuration settings 450, data storage for network data 454, and agent 494. Data storage for network data 454 may include, for example, a status/error log including network data specific to UE 400. As described above, network data 454 may include any network data, events, and/or states that may be related to determination of one or more roaming quality assessments. The network data may include event data such as a log of normal events and error events according to a logging level based on instructions from the network management system (e.g., NMS 130/300). Data storage for network data 454 may store any data used and/or generated by UE 400, such as network data used to determine proximity to a proximity zone, that is collected by UE 400 and transmitted to any of AP devices 142 in a wireless network 106 for further transmission to NMS 130.

Communications module 444 includes program code that, when executed by processor(s) 406, enables UE 400 to communicate using any of wired interface(s) 430, wireless interfaces 420A-420B and/or cellular interface 450C. Configuration settings 450 include any device settings for UE 400 settings for each of wireless interface(s) 420A-420B and/or cellular interface 420C.

Processors 406 may execute agent 494, which may be a software component of UE device 400 that captures data regarding one or more aspects of the performance of UE device 400. Agent 494 may capture information regarding the performance of one or more of applications (e.g., a video conference application of applications 442) and/or information regarding one or more SLEs associated with UE 400. For example, agent 494 may capture information regarding dropped packets during a video conferencing call and include the information in data 454.

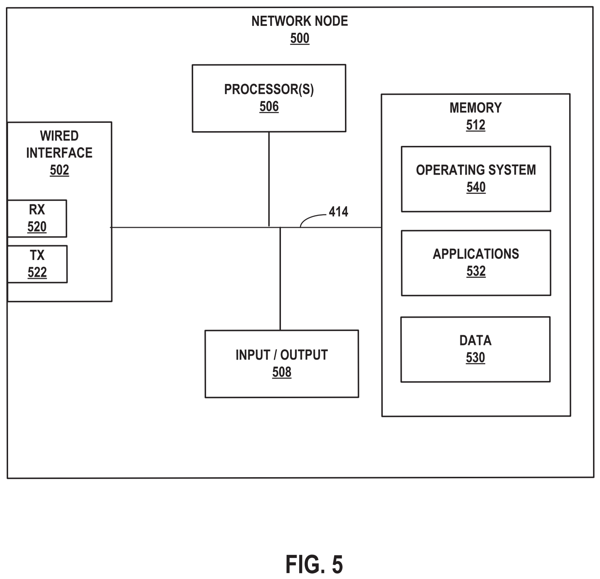

FIG. 5 is a block diagram illustrating an example network node 500 configured according to the techniques described herein. In one or more examples, the network node 500 implements a device or a server attached to the network 104 of FIGS. 1A/1B, e.g., router, switch, AAA server 110, DHCP server 116, DNS server 122, VNA 132, AP location module 135, Web server 128A-128X, etc., or a network device such as, e.g., routers, switches or the like.

In this example, network node 500 includes a communications interface 502, e.g., an Ethernet interface, a processor 506, input / output 508, e.g., display, buttons, keyboard, keypad, touch screen, mouse, etc., a memory 512 and an assembly of components 516, e.g., assembly of hardware module, e.g., assembly of circuits, coupled together via a bus 509 over which the various elements may interchange data and information. Communications interface 502 couples the network node 500 to a network, such as an enterprise network.

Though only one interface is shown by way of example, those skilled in the art should recognize that network nodes may have multiple communication interfaces. Communications interface 502 includes a receiver 520 via which the network node 500 can receive data and information (e.g., including data indicative of distances between APs, and /or operation related information such as registration request, AAA services, DHCP requests, Simple Notification Service (SNS) look-ups, and Web page requests). Communications interface 502 includes a transmitter 522, via which the network node 500 can send data and information (e.g., including location information, configuration information, authentication information, web page data, etc.).

Memory 512 stores executable software applications 532, operating system 540 and data/information 530. Data 530 includes system log and/or error log that stores network data and/or proximity information for node 500 and/or other devices, such as wireless access points, based on a logging level according to instructions from the network management system. Network node 500 may, in some examples, forward the network data to a network management system (e.g., NMS 130 of FIG. 1) for analysis as described herein.

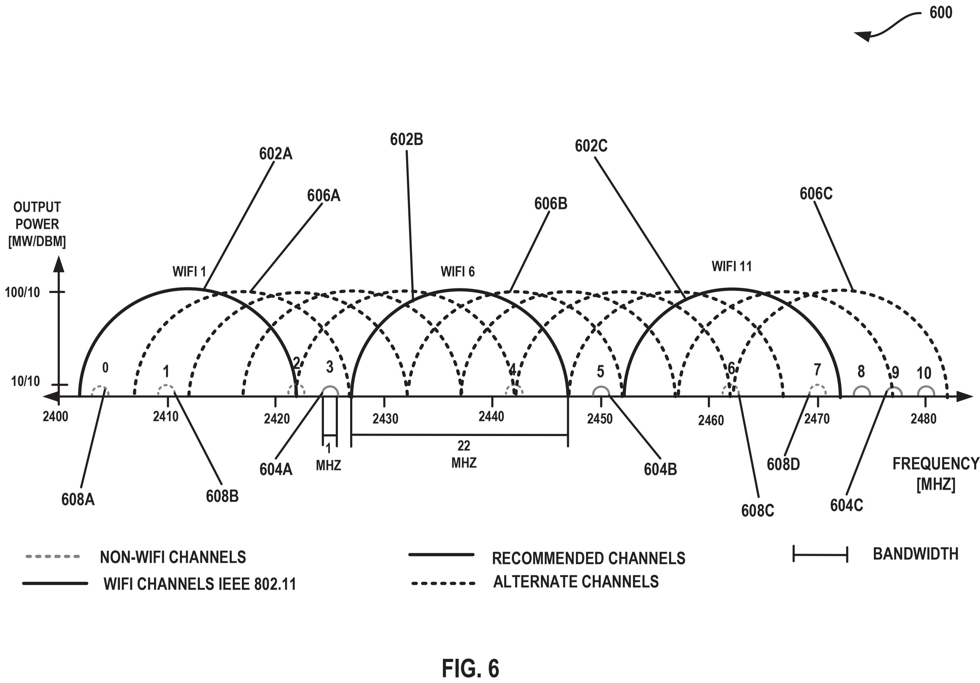

FIG. 6 is a graph of example wireless channels of a frequency band, in accordance with one or more techniques of this disclosure. FIG. 6 is described in the context of FIG. 1A.

RRM 134 may determine whether one or more WIFI channels and non-WIFI channels overlap in frequency. RRM 134 may determine the overlap between the channels such as that visually illustrated in FIG. 6, for instance the overlap between the WIFI and non-WIFI channels. For example, RRM 134 may determine ESL high frequency channels 0 and 1 overlap with WIFI channel 1 and that ESL channel 2 partially overlaps with ESL channel 3.

RRM 134 may determine whether a WIFI or non-WIFI channel should be indicated as recommended or as an alternate channel. RRM 134 may use one or more equations or processes to bias channel selection towards channel uniformity (e.g., evenly distributing channel assignments throughout a frequency band). For example, RRM 134 may determine that 2.4 GHz WIFI channel 1 should be a recommend channel but that 2.4 GHz WIFI channels 2, 3, and 4 should be alternate channels as they partially overlap in frequency with channel 1. RRM 134 may also determine whether non-WIFI channels should be indicted as recommended or alternate channels based on overlap with WIFI channels and/or other non-WIFI channels.

NMS 130 may use the information regarding the one or more WIFI channels and/or non-WIFI channels, such as the information regarding the WIFI and non-WIFI channels represented in graph 600, to determine configurations of APs. In the example of FIG. 6, graph 600 includes indications of one or more recommended WIFI channels as recommended WIFI channel indicators 602A-602C (hereinafter "recommended WIFI channel indicators 602") and as including indications of one or more alternate WIFI channels as alternate WIFI channel indicators 606A-606C (hereinafter "alternate WIFI channel indicators 606"). In an example RRM 134 determines that WIFI channels 1, 6, and 11 should be recommended and that the other WIFI channels should be alternate WIFI channels.

NMS 130 may determine recommended non-WIFI channels and/or alternate non-WIFI channels, such as those illustrated in graph 600. In the example, of FIG. 6, graph 600 includes indications of recommended non-WIFI channels as recommended non-WIFI channel indicators 604A-604C (hereinafter "recommended non-WIFI channel indicators 604") and visual indications of alternate non-WIFI channels as alternate non-WIFI channel indicators 608A-608D (hereinafter "alternate non-WIFI channel indicators 608"). Recommended non-WIFI channel indicators 604 may represent one or more non-WIFI channels (e.g., BLUETOOTH channels) that are recommended by NMS 130 and alternate non-WIFI channel indicators 608 may represent one or more non-WIFI channels that are not recommended by NMS 130 and/or are other non-WIFI channels available for use.

NMS 130 may determine overlap between WIFI channels and non-WIFI channels, as well as which channels are recommended and which channels are alternate channels as represented in graph 600. Graph 600 may include one or more indicators, such as recommended WIFI channel indicators 602, recommended non-WIFI channel indicators 604, alternate WIFI channel indicators 606, and alternate non-WIFI channel indicators 608, as visually arranged to represent a corresponding width of each channel with respect to frequency. In the example of FIG. 6, graph 600 visually represents the width of each WIFI and non-WIFI channel in terms of frequency (e.g., MHz). For instance, NMS 130 generates graph 600 with recommend WIFI channel indicator 602B spanning a width corresponding to 22 MHz and with recommended non-WIFI channel indicator 604A spanning a width of 1 MHz.

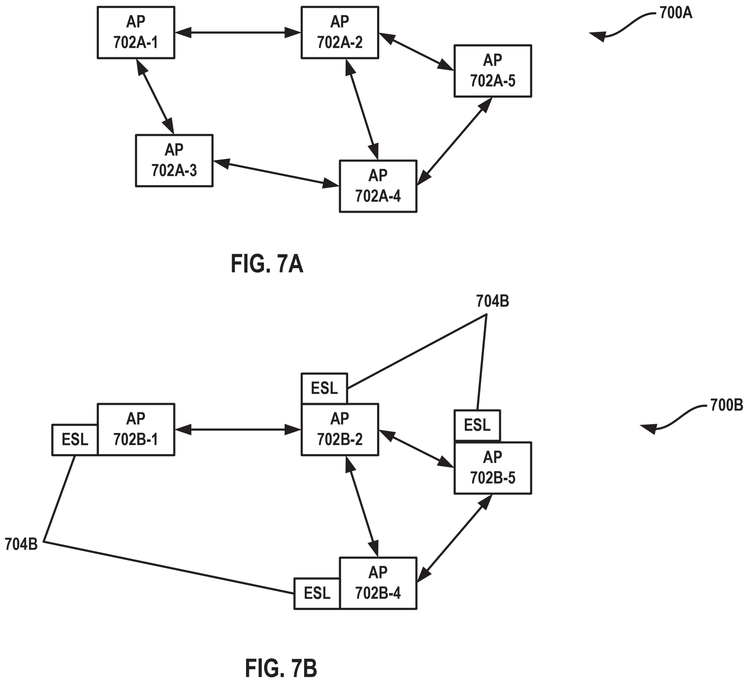

FIGS. 7A-7B are conceptual diagrams illustrating example network topologies, in accordance with one or more techniques of this disclosure. FIGS. 7A-7B are described in the context of FIG. 1A.

In the example of FIG. 7A, RRM 134 generates a graph database, of which graph 700A is visual representation, as including APs 702A-1 through 702A-5 (hereinafter "APs 702A"), which may be similar to APs 142 as illustrated in FIG. 1A. RRM 134 may generate a graph database using configuration information regarding APs 702A and information regarding neighbors of each of APs 702A. RRM 134 may generate a graph database with APs as nodes and edges representing proximity of the APs (e.g., how strongly APs can observe or "hear" each other within a site) in order to identify clusters of neighboring APs. For instance, RRM 134 may use scan radios to determine neighbor APs of each of APs 702A.

RRM 134 may generate a graph database as including indications of neighbor relationships of APs 702A. In the example of FIG. 7A, graph 700A includes arrows between APs to visually indicate which of APs 702A are neighbor APs. RRM 134 may determine that AP 702A-1 is a neighbor of APs 702A-3 and AP 702A-2 and generate graph 700A as visually indicating the neighbor relationship.

In the example of FIG. 7B, RRM 134 generates a graph database, of which graph 700B is a visual representation, as including APs 702B-1, 702B-2, 702B-4, and 702B-5 (hereinafter "APs 702B") and ESL dongles 704B. Graph 700B may be similar to graph 700A as illustrated in FIG. 7A, with each AP in graph 700B corresponding to an AP illustrated in graph 700A (e.g., 702B-1 corresponding to 702A-1, 702B-5 corresponding to 702A-5, etc.).

RRM 134 may generate the graph database as including indications of APs configured with non-WIFI transceivers (in this particular example ESL high frequency dongles). RRM 134 may obtain configuration information regarding APs 702B and maintain the configuration information. RRM 134 may use the configuration information to determine whether an AP is configured with a non-WIFI transmitter. RRM 134 may use the graph and/or configuration information when determining WIFI and/or non-WIFI channel assignments for APs 702B. For instance, RRM 134 may use graph 700B when determining channel assignments for AP 702B-4.

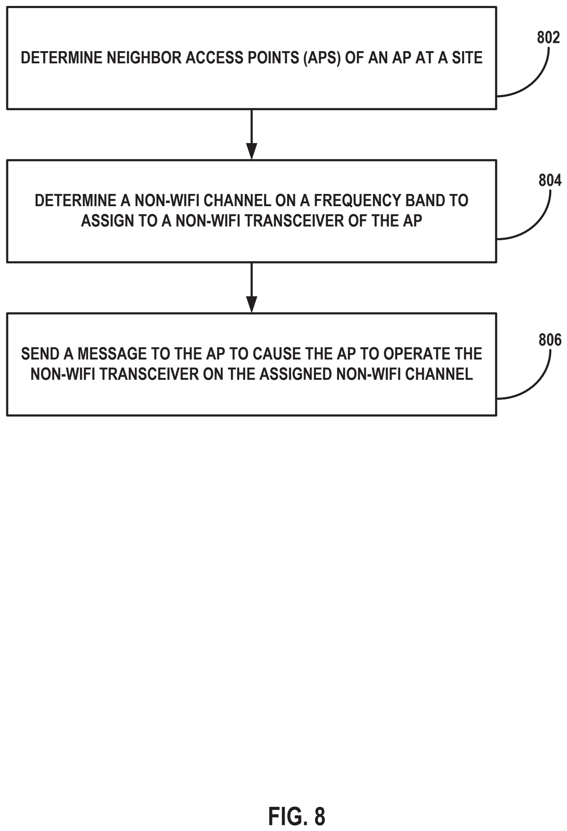

FIG. 8 is a flowchart of an example operation of determining channel assignments, in accordance with one or more techniques of the disclosure. FIG. 8 is described in the context of FIG. 1A.

A network management system, such as NMS 130, determines neighbor access points (APs) of an AP at a site, such as AP 142A-1 at site 102A (802). NMS 130 may determine the neighbor APs of AP 142A-1 based on scan radio data for a frequency band at site 102A. In an example, APs 142 at site 102A collect scan radio data using scan radios and provide the scan radio data to NMS 130. NMS 130 processes the scan radio data and determines neighbor APs of AP 142A-1 based on RSSIs of the APs 142 observed by AP 142A-1.

NMS 130 determines a non-WIFI channel on a frequency band to assign to a non-WIFI transceiver of AP 142A-1 (804). NMS 130 may determine a non-WIFI channel that does not interfere with operating channels for non-WIFI transceivers of one or more APs of the neighbor APs and that does not interfere with operating channels for WIFI radios of AP 142A-1 and neighbor APs that operate on the same frequency band as the non-WIFI transceiver of AP 142A-1. NMS 130 may use a graph database of APs 142 to determine the non-WIFI channel to assign to the AP and avoid assigning a non-WIFI channel that overlaps in frequency with WIFI channels and non-WIFI channels assigned to neighbor APs of AP 142A-1. In addition, NMS 130 may use configuration information of AP 142A-1 to avoid assigning a non-WIFI channel to AP 142A-1 that overlaps in frequency with one or more operating WIFI channels of AP 142A-1.

NMS 130 sends a message to AP 142A-1 to cause AP 142A-1 to operate the non-WIFI transceiver on the assigned non-WIFI channel (806). NMS 130 may send a message to AP 142A-1 as part of performing an initial channel assignment to AP 142A-1 or to reassign a different non-WIFI channel to AP 142A-1. In an example, NMS 130 determines a non-WIFI channel to assign to AP 142A-1. NMS 130 generates instructions to configure AP 142A-1 to use the non-WIFI channel and packages the instructions in a message. NMS 130 provides the message to AP 142A-1 and AP 142A-1 configures a non-WIFI transceiver to use the non-WIFI channel as the operating channel.

The techniques described herein may be implemented in hardware, software, firmware, or any combination thereof. Various features described as modules, units or components may be implemented together in an integrated logic device or separately as discrete but interoperable logic devices or other hardware devices. In some cases, various features of electronic circuitry may be implemented as one or more integrated circuit devices, such as an integrated circuit chip or chipset.

If implemented in hardware, this disclosure may be directed to an apparatus such as a processor or an integrated circuit device, such as an integrated circuit chip or chipset. Alternatively, or additionally, if implemented in software or firmware, the techniques may be realized at least in part by a computer-readable medium comprising instructions that, when executed, cause a processor to perform one or more of the methods described above. For example, the computer-readable medium may store such instructions for execution by a processor.

A computer-readable medium may form part of a computer program product, which may include packaging materials. A computer-readable medium may comprise a computer data storage medium such as random-access memory (RAM), read-only memory (ROM), non-volatile random-access memory (NVRAM), electrically erasable programmable read-only memory (EEPROM), Flash memory, magnetic or optical data storage media, and the like. In some examples, an article of manufacture may comprise one or more computer-readable storage media.

In some examples, the computer-readable storage media may comprise non-transitory media. The term "non-transitory" may indicate that the storage medium is not embodied in a carrier wave or a propagated signal. In certain examples, a non-transitory storage medium may store data that can, over time, change (e.g., in RAM or cache).

A computer-readable medium may also or alternatively be a transmission medium by which instructions may be conveyed. A computer-readable transmission medium may include carrier waves, transmission signals or the like. A computer-readable transmission medium may convey instructions between components of a single computer system and/or between plural separate computer systems.

The code or instructions may be software and/or firmware executed by processing circuitry including one or more processors, such as one or more digital signal processors (DSPs), general purpose microprocessors, application-specific integrated circuits (ASICs), field-programmable gate arrays (FPGAs), or other equivalent integrated or discrete logic circuitry. Accordingly, the term "processor," as used herein may refer to any of the foregoing structure or any other structure suitable for implementation of the techniques described herein. In addition, in some aspects, functionality described in this disclosure may be provided within software modules or hardware modules.

Therefore, from one perspective, there have been described techniques for a network management system (NMS) that determines a non-WIFI channel assignment for an access point (AP). In an example, the NMS is configured to determine neighbor APs at a site based on scan radio data for a frequency band at the site. The NMS determines a non-WIFI channel to assign to a non-WIFI transceiver of the AP that does not interfere with operating channels for non-WIFI transceivers of one or more APs of the neighbor APs and that does not interfere with operating channels for WIFI radios of the AP and the neighbor APs that operate on the same frequency band as the non-WIFI transceiver of the AP. The NMS is further configured to send a message to the AP to cause the AP to operate the non-WIFI transceiver on the assigned non-WIFI channel.

Further examples of feature combinations taught by the present disclosure are set out in the following numbered clauses.

Clause 1. A system comprising: memory; and processing circuitry in communication with the memory and configured to: determine neighbor access points (APs) of an AP at a site based on scan radio data for a frequency band at the site; determine a non-WIFI channel on the frequency band to assign to a non-WIFI transceiver of the AP that does not interfere with operating channels for non-WIFI transceivers of one or more APs of the neighbor APs and that does not interfere with operating channels for WIFI radios of the AP and the neighbor APs that operate on the same frequency band as the non-WIFI transceiver of the AP; and send a message to the AP to cause the AP to operate the non-WIFI transceiver on the assigned non-WIFI channel.

Clause 2. The system of clause 1, wherein the processing circuitry is configured to determine a configuration for a WIFI radio of the AP that operates on the same frequency band as the non-WIFI transceiver of the AP based at least in part on the non-WIFI transceivers of the AP and the one or more APs of the neighbor APs.

Clause 3. The system of clause 2, wherein to determine the configuration for the WIFI radio of the AP, the processing circuitry is configured to determine a WIFI channel on the frequency band to assign to the WIFI radio of the AP that does not interfere with the non-WIFI channel assigned to the non-WIFI transceiver of the AP or the operating channels for the non-WIFI transceivers of the neighbor APs.

Clause 4. The system of clause 2 or 3, wherein to determine the configuration for the WIFI radio of the AP, the processing circuitry is configured to: determine coverage and capacity on the frequency band for a cluster of APs that includes the AP and the neighbor APs; and determine, based on the one or more APs that have non-WIFI transceivers and the coverage and capacity on the frequency band, whether to cancel the WIFI radio of the AP that operates on the frequency band.

Clause 5. The system of any preceding clause, wherein the processing circuitry is configured to: obtain scan radio data of the frequency band from the AP; and generate a graph database of the frequency band based on the scan radio data, wherein the graph database of the frequency band indicates which of a plurality of APs at the site are the neighbor APs of the AP.

Clause 6. The system of any preceding clause, wherein the processing circuitry is configured to identify the one or more APs of the neighbor APs that have non-WIFI transceivers based on configuration information maintained by the system.

Clause 7. The system of clause 6, wherein the configuration information indicates the operating channels for the non-WIFI transceivers of the one or more APs of the neighbor APs.

Clause 8. The system of any preceding clause, wherein the non-WIFI transceivers comprise one of an electronic shelf label (ESL) high frequency transceiver, a BLUETOOTH transceiver, a BLUETOOTH Low Energy (BLE) transceiver, an ultra-wideband (UWB) transceiver, or a Zigbee transceiver.

Clause 9. A method, comprising: determining, by a computing system, neighbor access points (APs) of an AP at a site based on scan radio data for a frequency band at the site; determining, by a computing system, a non-WIFI channel on the frequency band to assign to a non-WIFI transceiver of the AP that does not interfere with operating channels for non-WIFI transceivers of one or more APs of the neighbor APs and that does not interfere with operating channels for WIFI radios of the AP and the neighbor APs that operate on the same frequency band as the non-WIFI transceiver of the AP; and sending, by a computing system, a message to the AP to cause the AP to operate the non-WIFI transceiver on the assigned non-WIFI channel.

Clause 10. The method of clause 9, further comprising: determining, by the computing system, a configuration for a WIFI radio of the AP that operates on the same frequency band as the non-WIFI transceiver of the AP based at least in part on the non-WIFI transceivers or the AP and the one or more APs of the neighbor APs.

Clause 11. The method of clause 10, wherein determining the configuration for the WIFI radio of the AP further comprises: determining a WIFI channel on the frequency band to assign to the WIFI radio of the AP that does not interfere with the non-WIFI channel assigned to the non-WIFI transceiver of the AP or the operating channels for the non-WIFI transceivers of the neighbor APs.

Clause 12. The method of clause 10 or 11, wherein determining the configuration for the WIFI radio of the AP further comprises: determining coverage and capacity on the frequency band for a cluster of APs that includes the AP and the neighbor APs; and determining, based on the one or more APs that have non-WIFI transceivers and the coverage and capacity on the frequency band, whether to cancel the WIFI radio of the AP that operates on the frequency band.

Clause 13. The method of any of clauses 9 to 12, further comprising: obtaining, by the computing system, scan radio data of the frequency band form the AP; and generating, by the computing system, a graph database of the frequency band based on the scan radio data, wherein the graph database of the frequency band indicates which of a plurality of APs at the site are the neighbor APs of the AP.

Clause 14. The method of any of clauses 9 to 13, further comprising: identifying, by the computing system, the one or more APs of the neighbor APs that have non-WIFI transceivers based on configuration information maintained by the system.

Clause 15. The method of clause 14, wherein the configuration information indicates the operating channels for the non-WIFI transceivers of the one or more APs of the neighbor APs.

Clause 16. The method of nay of clauses 9 to 15, wherein the non-WIFI transceivers comprise one of an electronic shelf label (ESL) high frequency transceiver, a BLUETOOTH transceiver, a BLUETOOTH Low Energy (BLE) transceiver, an ultra-wideband (UWB) transceiver, or a Zigbee transceiver.

Clause 17. Computer-readable media configured with instructions that, when executed, cause processing circuitry of a computing system to: determine neighbor access points (APs) of an AP at a site based on scan radio data for a frequency band at the site; determine a non-WIFI channel on the frequency band to assign to a non-WIFI transceiver of the AP that does not interfere with operating channels for non-WIFI transceivers of one or more APs of the neighbor APs and that does not interfere with operating channels for WIFI radios of the AP and the neighbor APs that operate on the same frequency band as the non-WIFI transceiver of the AP; and send a message to the AP to cause the AP to operate the non-WIFI transceiver on the assigned non-WIFI channel.

Clause 18. The computer-readable media of clause 17, wherein the instructions further cause the processing circuitry to determine a configuration for a WIFI radio of the AP that operates on the same frequency band as the non-WIFI transceiver of the AP based at least in part on the non-WIFI transceivers or the AP and the one or more APs of the neighbor APs.

Clause 19. The computer-readable media of clause 18, wherein to determine the configuration for the WIFI radio of the AP, the instructions further cause the processing circuitry to determine a WIFI channel on the frequency band to assign to the WIFI radio of the AP that does not interfere with the non-WIFI channel assigned to the non-WIFI transceiver of the AP or the operating channels for the non-WIFI transceivers of the neighbor APs.

Clause 20. The computer-readable media of clause 18 or 19, wherein to determine the configuration for the WIFI radio of the AP, the instructions further cause the processing circuitry to: determine coverage and capacity on the frequency band for a cluster of APs that includes the AP and the neighbor APs; and determine, based on the one or more APs that have non-WIFI transceivers and the coverage and capacity on the frequency band, whether to cancel the WIFI radio of the AP that operates on the frequency band.

## Claims

1. A system comprising:
memory; and
processing circuitry in communication with the memory and configured to:
determine neighbor access points, APs, of an AP at a site based on scan radio data for a frequency band at the site;
determine a non-WIFI channel on the frequency band to assign to a non-WIFI transceiver of the AP that does not interfere with operating channels for non-WIFI transceivers of one or more APs of the neighbor APs and that does not interfere with operating channels for WIFI radios of the AP and the neighbor APs that operate on the same frequency band as the non-WIFI transceiver of the AP; and
send a message to the AP to cause the AP to operate the non-WIFI transceiver on the assigned non-WIFI channel.

2. The system of claim 1, wherein the processing circuitry is configured to determine a configuration for a WIFI radio of the AP that operates on the same frequency band as the non-WIFI transceiver of the AP based at least in part on the non-WIFI transceivers of the AP and the one or more APs of the neighbor APs.

3. The system of claim 2, wherein to determine the configuration for the WIFI radio of the AP, the processing circuitry is configured to determine a WIFI channel on the frequency band to assign to the WIFI radio of the AP that does not interfere with the non-WIFI channel assigned to the non-WIFI transceiver of the AP or the operating channels for the non-WIFI transceivers of the neighbor APs.

4. The system of claim 2, wherein to determine the configuration for the WIFI radio of the AP, the processing circuitry is configured to:
determine coverage and capacity on the frequency band for a cluster of APs that includes the AP and the neighbor APs; and
determine, based on the one or more APs that have non-WIFI transceivers and the coverage and capacity on the frequency band, whether to cancel the WIFI radio of the AP that operates on the frequency band.

5. The system of any of claims 1-4, wherein the processing circuitry is configured to:
obtain scan radio data of the frequency band from the AP; and
generate a graph database of the frequency band based on the scan radio data, wherein the graph database of the frequency band indicates which of a plurality of APs at the site are the neighbor APs of the AP.

6. The system of any of claims 1-5, wherein the processing circuitry is configured to identify the one or more APs of the neighbor APs that have non-WIFI transceivers based on configuration information maintained by the system.

7. The system of claim 6, wherein the configuration information indicates the operating channels for the non-WIFI transceivers of the one or more APs of the neighbor APs.

8. The system of any of claims 1-7, wherein the non-WIFI transceivers comprise one of an electronic shelf label high frequency transceiver, a BLUETOOTH transceiver, a BLUETOOTH Low Energy transceiver, an ultra-wideband transceiver, or a Zigbee transceiver.

9. A method, comprising:
determining, by a computing system, neighbor access points, APs, of an AP at a site based on scan radio data for a frequency band at the site;
determining, by a computing system, a non-WIFI channel on the frequency band to assign to a non-WIFI transceiver of the AP that does not interfere with operating channels for non-WIFI transceivers of one or more APs of the neighbor APs and that does not interfere with operating channels for WIFI radios of the AP and the neighbor APs that operate on the same frequency band as the non-WIFI transceiver of the AP; and
sending, by a computing system, a message to the AP to cause the AP to operate the non-WIFI transceiver on the assigned non-WIFI channel.

10. The method of claim 9, further comprising steps corresponding to the functionality recited in any of claims 2-8.

11. Computer-readable media comprising instructions that, when executed by one or more programmable processors, cause the one or more programmable processor to perform the method recited by any of claims 9-10.
